# EUROPÄISCHE PATENTSCHRIFT

(11) **EP 1 268 328 B1**
(45) Veröffentlichungstag und Bekanntmachung des Hinweises auf die Patenterteilung: **31.03.2004**
(21) Anmeldenummer: 01913535.9
(22) Anmeldetag: 25.01.2001
(51) Int. Cl.: B65G 69/18, B65B 39/00, F16K 1/226

(54) **DICHTSYSTEM AN EINEM KONSTRUKTIONSELEMENT MIT EINER VERSCHLIESSBAREN DURCHLASSÖFFNUNG UND VERFAHREN ZUR ANWENDUNG**
SEALING SYSTEM ON A STRUCTURAL ELEMENT, SAID SYSTEM HAVING A THROUGH-OPENING THAT CAN BE CLOSED AND A METHOD FOR APPLYING SAME
SYSTEME D'ETANCHEITE MONTE SUR UN ELEMENT DE CONSTRUCTION COMPORTANT UNE OUVERTURE DE PASSAGE POUVANT ETRE FERMEE, ET SON PROCEDE D'UTILISATION

(30) Priorität: 26.01.2000 DE 10004695
(43) Veröffentlichungstag der Anmeldung: 02.01.2003
(73) Patentinhaber: Glatt Systemtechnik GmbH, 01277 Dresden (DE)
(72) Erfinder: CORNELIUS, Hans-Dieter, 01217 Dresden (DE); PRITZKE, Heinz, 01737 Kesselsdorf / OT Braunsdorf (DE)
(74) Vertreter: Pätzelt, Peter, Dipl.-Ing.
(86) Internationale Anmeldenummer: PCT/DE2001/000320
(87) Internationale Veröffentlichungsnummer: WO 2001/055017

(56) Entgegenhaltungen:
- DE-A- 19 615 646
- DE-A- 19 643 248
- DE-C- 4 342 962

## Beschreibung

### Technisches Gebiet

Die Erfindung betrifft ein Dichtsystem nach dem Oberbegriff des Anspruchs 1, insbesondere für Konstruktionselemente, welche mit entsprechenden anderen Konstruktionselementen zum Zwecke des Transfers eines Gutes zwischen den Konstruktionselementen gekoppelt werden können. Des Weiteren betrifft die Erfindung ein Verfahren zur Anwendung des Dichtsystems.

Als Konstruktionselemente werden dabei Kupplungsteile an beliebigen Einrichtungen wie Transport- oder Lagerbehälter, Transfereinrichtungen oder Bearbeitungs- bzw. Behandlungsmaschinen u. ä. verstanden.

Mit derartigen Einrichtungen können verschiedenartige Produkte transportiert oder transferiert werden. Produkte sind dabei meist fließfähige, z.B. teilchenförmige, flüssige oder pastöse Güter. Oft handelt es sich bei den Gütern um Produkte mit einem Wirkstoff und/oder einem Hilfsstoff zur Herstellung eines Arzneimittels oder sonstiger chemischer Produkte, die in der Umwelt und insbesondere beim Menschen zu negativen Wirkungen führen können. Deshalb ist es erforderlich, diese Güter möglichst unter weitgehend hermetischer Abdichtung zu behandeln, zu transportieren oder zu transferieren.

### Stand der Technik

Nach dem Stand der Technik sind verschiedene Schließklappen bzw. Schließklappensysteme bekannt, mit denen die einzelnen Einrichtungen einmal in Alleinstellung abgedichtet werden können. Nach dem Kuppeln der zusammenwirkenden Einrichtungen können die Schließklappen der beiden Einrichtungen gemeinsam in paralleler Lage um eine gemeinsame Achse in eine Öffnungsstellung gebracht werden. Von besonderer Bedeutung ist dabei die Ausbildung der Abdichtungen.

In der DE 43 42 962 C1 wird eine Vorrichtung zum Kuppeln von Behältnissen angegeben. In Anschluss-Rohrstutzen sind schwenkbare Schließklappen angeordnet. Dabei sind die Schließklappen in je einer im Wesentlichen kreisförmigen Dichtwulst gehaltert. Die kreisförmige Stirnfläche des jeweiligen Rohrstutzens ist von dem gleichzeitig die betreffende Schließklappe dicht lagernden Dichtwulst derart überdeckt, dass eine dem Rohrstutzen abgewandte Stirndichtfläche des jeweiligen Dichtwulstes derart schräg radial nach außen in Richtung auf den anzuschließenden anderen Rohrstutzen ansteigt, dass beim Andrücken der beiden Rohrstutzen unter Abdichtung der Stoßstelle die dichtflächennahen Bereiche beider Dichtwulste radial nach außen gedrückt werden und die Schließklappen zum Verschwenken entlasten, so dass ein zylindrischer Querschnitt erhalten bleibt und der Spalt zwischen den Schließklappen sicher geschlossen wird.

Die DE 196 43 248 A1 beschreibt ein Dichtsystem für eine Schließklappe an einer Durchlassöffnung einer Einrichtung, die mit gleichartigen Schließklappen an anderen Einrichtungen derart zusammenwirken, dass die Innenräume der beiden Einrichtungen miteinander verbunden werden können, wobei die einzelne Schließklappe in der Schließstellung zur Abdichtung gegenüber einer zugehörigen Durchlassöffnung an ihrem Umfang eine Dichtung aufweist. Mindestens eine der beiden zusammenwirkenden Schließklappen weist am Umfang eine Nut auf, die beidseitig von ringförmigen Schenkeln begrenzt wird, wobei der Schenkel, der in der Schließstellung die Nut zum Innenraum der jeweiligen Einrichtung begrenzt, bis nahe an die Dichtfläche der Durchflußöffnung heranreicht und der andere Schenkel gegenüber dem ersteren radial verkürzt ist. An der Dichtung befindet sich im Bereich radial außerhalb des verkürzten Schenkels eine elastische Wulst, die den verkürzten Schenkel axial übergreift und in ungekuppelter Stellung der Einrichtungen die Dichtebene zwischen den Schließklappen mindestens teilweise überragt.

### Darstellung der Erfindung

Der Erfindung liegt als Aufgabe zugrunde, ein Dichtsystem der eingangs genannten Art anzugeben, mit dem die einzelnen Konstruktionselemente beim Transferieren von Stoffen, insbesondere von sensiblen oder toxischen Stoffen, das Austreten auch nur geringer Mengen in die Umgebung weitgehend verhindert. Des Weiteren besteht die Aufgabe darin, ein Verfahren zur Anwendung des Dichtsystems anzugeben.

Die Erfindung löst die Aufgabe für das Dichtsystem durch die im kennzeichnenden Teil des Anspruchs 1 genannten Merkmale. Für das Verfahren zur Anwendung des Dichtsystems wird die Aufgabe durch die im kennzeichnenden Teil des Anspruchs 8 genannten Merkmale gelöst.

Vorteilhafte Weiterbildungen der Erfindung sind in den jeweiligen Unteransprüchen gekennzeichnet und werden nachstehend zusammen mit der Beschreibung der bevorzugten Ausführung der Erfindung, einschließlich der Zeichnung, näher dargestellt.

Der Kern der Erfindung besteht im Zusammenwirken der einzelnen Elemente für verschiedene Aufgaben. Grundsätzlich ist die Erfindung an einem von zwei zusammenwirkenden Konstruktionselementen realisiert. Die volle Wirksamkeit erlangt das Dichtsystem im Zusammenwirken mit den weiteren Merkmalen nach den Unteransprüchen.

Im Ruhezustand des ersten Konstruktionselementes, d.h. wenn bei diesem in Alleinstellung die erste Schließklappe geschlossen ist, drückt die elastische Dichtung durch ihre inneren Kräfte oder mittels gesonderter Federkräfte auf den äußeren radialen Rand der ersten Schließklappe. Die erste dynamische Dichtung ist dabei grundsätzlich ohne inneren Druck. Die erste Schließklappe dichtet das erste Konstruktionselement ab.

Kurz vor dem Kuppeln des ersten Konstruktionselementes mit einem anderen zweiten Konstruktionselement wird die erste dynamische Dichtung mit innerem Druck beaufschlagt und dadurch die elastische Dichtung radial nach außen gedrückt. An der Dichtheit zwischen der ersten Schließklappe und dem ersten Konstruktionselement ändert sich dabei nichts. Es wird lediglich die kreisförmige Dichtlinie zwischen diesen nach außen verschoben.

Wenn in der Folge das erste Konstruktionselement auf eine geeignete Fläche des zweiten Konstruktionselementes aufgesetzt wird, wird dabei der stirnseitige Abschnitt der elastischen Dichtung zwischen dem ersten Konstruktionselement und dem zweiten Konstruktionselement eingeklemmt, d.h die elastische Dichtung wirkt als radiale Dichtung. In dieser Position wird die elastische Dichtung auch gehalten, wenn der innere Überdruck in der ersten dynamischen Dichtung abgebaut wird. Dann wird auch die Dichtkraft zwischen der elastischen Dichtung und der ersten Schließklappe weitgehend aufgehoben und die erste Schließklappe kann innerhalb des ersten Konstruktionselementes problemlos geschwenkt werden, d.h. die erste Schließklappe wird geöffnet und ein Gut kann zwischen dem ersten Konstruktionselement und dem zweiten Konstruktionselement transferiert werden. Zum Verschließen des ersten Konstruktionselementes wird die erste Schließklappe wieder in die Schließstellung geschwenkt, mit innerem Druck beaufschlagt und das erste Konstruktionselement vom zweiten Konstruktionselement abgehoben. Danach kann wieder die nach innen gerichtete Kraft der elastischen Dichtung wirken und der innere Druck in der ersten dynamischen Dichtung kann abgebaut werden, ohne dass die erforderliche Dichtwirkung zwischen der ersten Schließklappe und dem ersten Konstruktionselement beeinträchtigt wird.

In dieser einfachsten Ausbildung ist es nicht erforderlich, dass an dem zweiten Konstruktionselement weitere Elemente oder eine Schließklappe vorhanden ist. Die erste Schließklappe wird allein als Verschluss des ersten Konstruktionselementes eingesetzt.

Die Ausbildung der elastischen Dichtung kann in einem großen Umfang variiert werden. Eine vorteilhafte Gestaltung ist im Ausführungsbeispiel dargestellt.

In der Ausgestaltung nach Anspruch 4 kann ein zweites Konstruktionselement entsprechend dem ersten Konstruktionselement ausgebildet sein und mit diesem zusammenwirken. Dann sind erstes und zweites Konstruktionselement selbstständig verschließbar.

In der Ausgestaltung nach Anspruch 7 ist das erfindungsgemäße Dichtsystem derart ausgebildet, dass im übertragenen Sinn eine Spüleinrichtung integriert ist. Dabei kann der Gaskanal ein echter verschlossener Kanal sein oder wie im Ausführungsbeispiel eine Ringnut, die erst nach dem Verschließen mit der elastischen Dichtung zum Gaskanal wird.

Nach dem Verfahren zur Anwendung des Dichtsystems wird vor dem Entkuppeln des ersten und zweiten Konstruktionselementes, wenn erste und zweite Schließklappe verschlossen sind und noch kein innerer Druck auf die erste und zweite dynamische Dichtung wirkt, ein Spülgas in den Gaskanal geleitet. Dieses kann durch mindestens eine Auslassöffnung in die Spalte zwischen der elastischen Dichtung und der ersten dynamischen Dichtung sowie in die Spalte zwischen der zweiten Durchlassöffnung und der zweiten dynamischen Dichtung strömen. Dabei werden auch minimale Reste des transferierten Gutes, z.B. toxische Stäube, in die Konstruktionselemente I bzw. II geblasen. Wenn in der Folge die erste und zweite dynamische Dichtung mit einem inneren Druck beaufschlagt werden, können das erste und zweite Konstruktionselement voneinander getrennt werden und es können praktisch keine Reste des transferierten Gutes in die Umgebung gelangen.

Die Erfindung wird nachstehend an einem Ausführungsbeispiel näher erläutert.

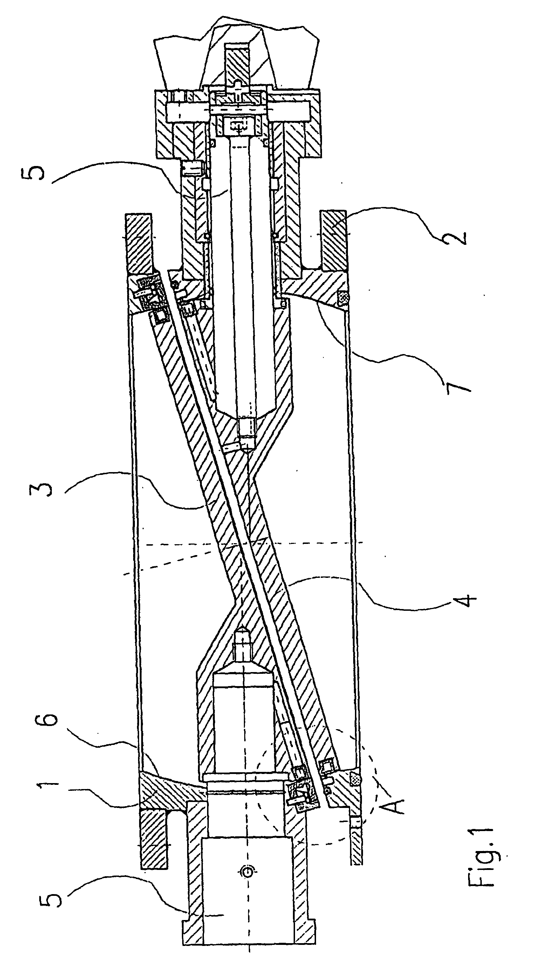

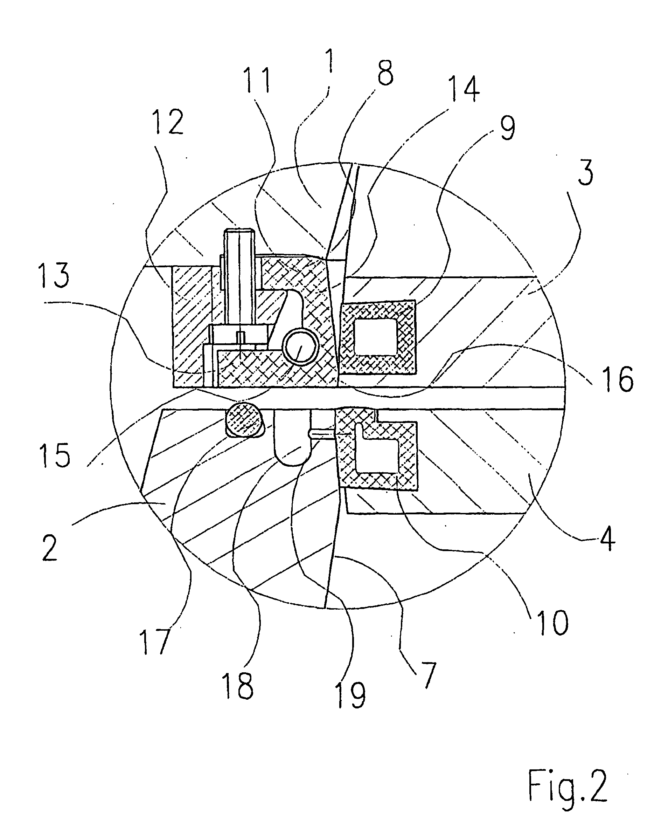

Die Zeichnung zeigt ein Dichtsystem an Einrichtungen mit je einem erfindungsgemäßen Konstruktionselement. Figur 1 zeigt eine Gesamtübersicht. Die Figuren 2 bis 5 zeigen die Einzelheit A aus Figur 1 in verschiedenen Positionen der Konstruktionselemente zueinander.

Figur 1 zeigt ein als Kupplungsflansch 1 ausgebildetes erstes Konstruktionselement, welches beispielsweise an einem nicht dargestellten Transportbehälter montiert ist, und ein ebenfalls als Kupplungsflansch 2 ausgebildetes zweites Konstruktionselement, welches beispielsweise an einer nicht dargestellten ortsfesten Bearbeitungsstation montiert ist. Dabei soll ein pulverförmiges, toxisches Gut von dem Transportbehälter in die Bearbeitungsstation transferiert werden.

Die Kupplungsflansche 1 und 2 sind weitgehend äquivalent ausgebildet. Der Kupplungsflansch 1 weist eine erste Schließklappe 3 und der Kupplungsflansch 2 eine zweite Schließklappe 4 auf, die radial mit Dichtflächen 6 bzw. 7 der ersten bzw. der zweiten Durchflussöffnung zusammenwirken. Die Schließklappen 3 und 4 sind beide mit einer Schwenkeinrichtung 5 verbunden, deren Achsen in der gekuppelten Stellung der Kupplungsflansche 1 und 2 übereinander liegen. Dabei liegen auch die Schließklappen 3 und 4 eng aneinander und können gemeinsam geschwenkt werden, derart dass das jeweilige Gut vom Kupplungsflansch 1 zum Kupplungsflansch 2 gelangen kann.

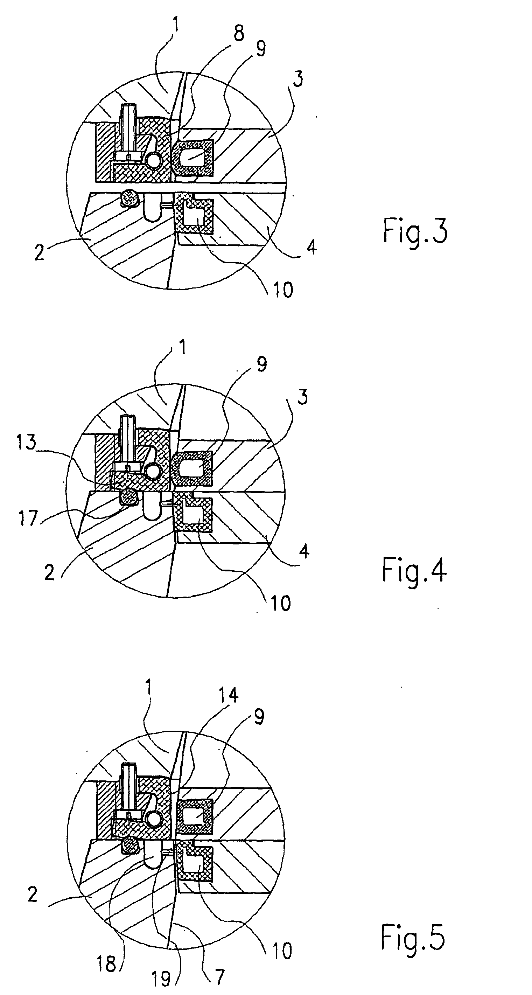

Anhand der Einzelheit A in den Figuren 2 bis 5 wird das Ausführungsbeispiel detaillierter dargestellt. In Figur 1 sind die Kupplungsflansche 1 und 2 voneinander getrennt. Im Kupplungsflansch 1 ist ein als elastischer Dichtring 8 eingeführte elastische Dichtung und an der ersten Schließklappe 3 eine als Schlauchdichtung 9 ausgeführte erste dynamische Dichtung angeordnet. In entsprechender Weise ist an der Schließklappe 4 im Kupplungsflansch 2 eine ebenfalls als Schlauchdichtung 10 ausgeführte zweite dynamische Dichtung vorhanden. Am Kupplungsflansch 2 sind weiterhin ein Dichtring 17 gehaltert und ein als Ringnut 18 ausgeführter Gaskanal mit mehreren Auslassöffnungen 19 zum Inneren des Kupplungsflansches 2 vorgesehen. Die Auslassöffnungen 19 münden an der Dichtfläche 7 und in der Höhe der Schlauchdichtung 10 in einen Spalt (Figur 5) zwischen der Dichtfläche 7 und dem Steg 14 als der äußeren Begrenzung und der Schlauchdichtung 10, der Schließklappe 3 und der Schlauchdichtung 9 als innere Begrenzung ein.

Nachfolgend wird das Dichtsystem in seiner erfindungsgemäßen Anwendung beschrieben. In der Stellung nach Figur 1 ist die Schlauchdichtung 10 mit innerem Druck beaufschlagt und dichtet die Schließklappe 4 gegenüber der Dichtfläche 7 ab. Da der Kupplungsflansch 2 zu einer stationären Anlage gehört, ist die Druckerzeugung in der Regel auch problemlos möglich.

Die Schlauchdichtung 9 an der Schließklappe 3 ist drucklos. In den ungekuppelten Positionen ist auch grundsätzlich kein Druckmedium erforderlich. Wenn sich der Kupplungsflansch 1 dem Kupplungsflansch 2 nähert, damit beide gekoppelt werden können, dann ist es in der Praxis auch leicht möglich, die Schlauchdichtung 9 mit der Druckquelle für die Schlauchdichtung 10 zu verbinden.

Der Dichtring 8 im Kupplungsflansch 1 ist u-förmig mit radial nach außen gerichteten Schenkeln 11 und 13 ausgebildet. Der zum Kupplungsflansch 1 hin gerichtete Schenkel 11 ist mit einem Spannring 12 am Kupplungsflansch 1 arretiert. Der Schenkel 13 ist im Wesentlichen bündig mit der Dichtfläche zwischen dem Kupplungsflansch 1 und dem Kupplungsflansch 2. Der Steg 14 des Dichtringes 8 liegt im Wesentlichen axial zur Durchflussöffnung, wobei an der Anbindung zum Schenkel 13 der innere Durchmesser geringer ist als an der Anbindung zum Schenkel 11. Im Inneren des Dichtringes 8 und an der Anbindung des Schenkels 13 ist ein Federring 15 vorgesehen, der diesen Bereich des Dichtringes 8 permanent in Richtung der Achse des Dichtringes 8 drückt.

In Figur 2 ist deutlich zu sehen, wie in der vorbeschriebenen Stellung der Dichtring 8 im Bereich 16 direkt an der Umfangsfläche der Schließklappe 3 sowie an der Schlauchdichtung 9 anliegt und somit die Schließklappe 3 gegen den Kupplungsflansch 1 abdichtet.

Figur 3 zeigt die Stellung der Kupplungsflansche 1 und 2 zueinander kurz vor der Kupplung. Die Schlauchdichtung 9 wurde mit innerem Druck beaufschlagt und hat den Dichtring 8 nach außen gedrückt.

Figur 4 zeigt die Stellung der Kupplungsflansche 1 und 2 zueinander nach der Kupplung miteinander. Die Schließklappen 3 und 4 liegen aneinander. Dabei liegt die Schlauchdichtung 10 durch ihre spezifische äußere Ausbildung dicht an der Schließklappe 3 an, so dass zwischen den Schließklappen 3 und 4 keine Spalte offen bleiben, in denen sich beim Transfer eines Gutes, Reste desselben ablagern könnten.

Im Kupplungsflansch 2 ist ein Dichtring 17 vorgesehen, der derart positioniert ist, dass er gegen den Schenkel 13 des Dichtringes 8 drückt und dadurch eine sichere Abdichtung zwischen den Kupplungsflanschen 1 und 2 gewährleistet ist.

Figur 5 zeigt die Stellung der Kupplungsflansche 1 und 2 entsprechend Figur 4. Die Schlauchdichtungen 9 und 10 sind druckentlastet und haben sich durch innere Spannung von dem Dichtring 8 bzw. der Dichtfläche 7 entfernt. Da andererseits der Dichtring 8 lagefixiert ist sind die Schließklappen 3 und 4 zum Öffnen gemeinsam frei schwenkbar.

Wenn die Kupplungsflansche 1 und 2 wieder voneinander getrennt werden sollen, werden die Schließklappen 3 und 4 gemeinsam in die Schließstellung geschwenkt. In die Ringnut 18, die nach dem Verschließen durch den Schenkel 13 des Dichtringes 8 (Figur 4 und 5) einen Spülgaskanal bildet, wird ein Spülgas eingeleitet. Das Spülgas strömt durch den oben beschriebenen Spalt am äußeren Rand der Schließklappen 3 und 4 und spült dabei alle Reste des vorher transferierten Gutes in die angrenzenden Kammern.

Nach ausreichender Spülung werden die Schlauchdichtungen 9 und 10 mit innerem Druck beaufschlagt, wobei sich wieder die Positionen nach Figur 4 einstellen.

Wenn die Kupplungsflansche 1 und 2 anschließend voneinander entfernt werden, können praktisch keine Reste des transferierten Gutes in die Umgebung gelangen. Am Kupplungsflansch 1 können nacheinander wieder die Positionen nach Figur 3 und 2 eingestellt werden.

Das dargestellte erfindungsgemäße Ausführungsbeispiel ist in der Praxis außerordentlich vorteilhaft einsetzbar und gewährleistet einen sicheren Transport und Transfer von sensiblen, toxischen und gefährlichen Gütern.

Die Erfindung ist selbstverständlich nicht auf das beschriebene Ausführungsbeispiel beschränkt. So ist es ohne weiteres möglich, die einzelnen Dichtungen oder Flächen an die jeweiligen technischen Erfordernisse anzupassen.

## Patentansprüche

1. Dichtsystem an einem ersten Konstruktionselement (1), welches eine erste Durchlassöffnung aufweist, in der eine um eine zentrische Achse drehbare erste Schließklappe (3) zum Verschließen der ersten Durchlassöffnung vorhanden ist, und das axial zur ersten Durchlassöffnung mit einem zweiten Konstruktionselement (2) gekoppelt werden kann, wobei die beiden Konstruktionselemente (1, 2) in einer Dichtebene aneinander liegen und zwischen der ersten Schließklappe (3) und dem ersten Konstruktionselement (1) an der ersten Schließklappe (3) an ihrem radial äußeren Umfang eine erste dynamische Dichtung (9) vorhanden ist, **dadurch gekennzeichnet, dass** an der Wandung der ersten Durchlassöffnung und im Wirkbereich der ersten dynamischen Dichtung (9) eine elastische Dichtung (8) vorhanden ist, wobei der innere Durchmesser der elastischen Dichtung (8) im Ruhezustand kleiner ist als der äußere Durchmesser der ersten Schließklappe (3) und die erste dynamische Dichtung (9) in der Schließstellung der ersten Schließklappe (3) durch inneren Druck derart radial nach außen aufgebläht werden kann, dass die elastische Dichtung (8) mindestens teilweise radial nach außen verschoben wird.

2. Dichtsystem nach Anspruch 1, **dadurch gekennzeichnet, dass** die elastische Dichtung (8) axial zur ersten Durchlassöffnung im Wesentlichen zylinderförmig ausgebildet ist, wobei das zum ersten Konstruktionselement (1) hin innere Ende an diesem arretiert ist und das äußere Ende nach innen zur Achse der ersten Durchlassöffnung gerichtet ist.

3. Dichtsystem nach Anspruch 2, **dadurch gekennzeichnet, dass** am äußere Ende der elastischen Dichtung (8) ein nach innen zur Achse der ersten Durchlassöffnung wirkendes Federelement (15) vorhanden ist.

4. Dichtsystem nach einem der Ansprüche 1 bis 3, **dadurch gekennzeichnet, dass** an dem zweiten Konstruktionselement (2) eine zweite Durchlassöffnung mit einer zweiten Schließklappe (4) vorhanden ist, wobei die zweite Schließklappe (4) in gekuppelter Stellung parallel an der ersten Schließklappe (3) anliegt und mit dieser gemeinsam schwenkbar ist, und die zweite Schließklappe (4) eine dynamische zweite Dichtung (10) aufweist, die im Wesentlichen der ersten dynamischen Dichtung (9) an der ersten Schließklappe (3) entspricht.

5. Dichtsystem nach Anspruch 4, **dadurch gekennzeichnet, dass** die erste dynamische Dichtung (9) an der ersten Schließklappe (3) und/oder die zweite dynamische Dichtung (10) an der zweiten Schließklappe (4) derart ausgebildet ist, dass die beiden dynamischen Dichtungen (9, 10) aneinander liegen.

6. Dichtsystem nach einem der Ansprüche 1 bis 5, **dadurch gekennzeichnet, dass** die elastische Dichtung (8) derart ausgebildet ist, dass die beiden Konstruktionselemente (1, 2) in der gekuppelten Stellung gegeneinander abgedichtet werden.

7. Dichtsystem nach einem der Ansprüche 4 bis 6, **dadurch gekennzeichnet, dass** am zweiten Konstruktionselement (2), zwischen einer radial äußeren Dichtlinie und der zweiten Durchlassöffnung, zwischen den Konstruktionselementen (1, 2) ein ringförmiger Gaskanal (18) vorhanden ist, der mit einem Druckmittelerzeuger verbunden werden kann und mindestens eine Auslassöffnung (19) in der Wandung der zweiten Durchlassöffnung sowie im Wirkbereich der zweiten dynamischen Dichtung (10) aufweist.

8. Verfahren zur Anwendung eines Dichtsystems nach einem der vorstehenden Ansprüche, **dadurch gekennzeichnet, dass** ein Dichtsystem nach einem der vorangehenden Ansprüche vorgesehen wird, wobei vor der Kupplung des ersten Konstruktionselementes (1) mit dem zweiten Konstruktionselement (2) die erste dynamische Dichtung (9) derart mit einem inneren Druck beaufschlagt wird, dass die elastische Dichtung (8) radial nach außen gedrückt wird und dass zum Öffnen der Schließklappen (3, 4) der innere Druck in der ersten dynamischen Dichtung (9) und gegebenenfalls in der zweiten dynamischen Dichtung (10) abgebaut wird.

9. Verfahren nach Anspruch 8, **dadurch gekennzeichnet, dass** vor dem Entkuppeln der Konstruktionselemente (1, 2) und nach dem Abbau des inneren Druckes in der ersten dynamischen Dichtung (9) und gegebenenfalls in der zweiten dynamischen Dichtung (10) in den ringförmigen Kanal (18) ein Spülgas eingeblasen wird.

10. Verfahren nach Anspruch 9, **dadurch gekennzeichnet, dass** beim Vorhandensein einer zweiten dynamischen Dichtung (10) vor dem Entkuppeln der Konstruktionselemente (1, 2) und nach dem Einblasen eines Spülgases in den ringförmigen Kanal (18) die zweite dynamische Dichtung (10) mit einem inneren Druck beaufschlagt wird.

## Claims

1. Sealing system on a first structural element (1) which has a first through-opening, in which there is provided a first closing flap (3) which can be rotated about a central axis and is intended for closing a first through-opening, and which can be coupled to a second structural element (2) axially in relation to the first through-opening, the two structural elements (1, 2) butting against one another in a sealing plane and, between the first closing flap (3) and the first structural element (1), a first dynamic seal (9) being provided on the radially outer circumference of the first closing flap (3), **characterized in that** an elastic seal (8) is provided on the wall of the first through-opening and in the region of action of the first dynamic seal (9), the internal diameter of the elastic seal (8) in the rest state being smaller than the external diameter of the first closing flap (3), and it being possible for the first dynamic seal (9), in the closed position of the first closing flap (3), to be inflated radially outward by internal pressure such that the elastic seal (8) is displaced at least partially in the radially outward direction.

2. Sealing system according to Claim 1, **characterized in that**, axially in relation to the first through-opening, the elastic seal (8) is of essentially cylindrical design, the inner end, in the direction of the first structural element (1), being arrested on said first structural element and the outer end being directed inward in relation to the axis of the first through-opening.

3. Sealing system according to Claim 2, **characterized in that** provided at the outer end of the elastic seal (8) is a spring element (15) which acts inward in relation to the axis of the first through-opening.

4. Sealing system according to one of Claims 1 to 3, **characterized in that** a second through-opening with a second closing flap (4) is provided on the second structural element (2), it being the case that the second closing flap (4), in the coupled position, butts against the first closing flap (3), parallel to the latter, and can be pivoted together therewith, and the second closing flap (4) has a dynamic second seal (10) which corresponds essentially to the first dynamic seal (9) on the first closing flap (3).

5. Sealing system according to Claim 4, **characterized in that** the first dynamic seal (9) is formed on the first closing flap (3), and/or the second dynamic seal (10) is formed on the second closing flap (4), such that the two dynamic seals (9, 10) butt against one another.

6. Sealing system according to one of Claims 1 to 5, **characterized in that** the elastic seal (8) is designed such that, in the coupled position, the two structural elements (1, 2) are sealed in relation to one another.

7. Sealing system according to one of Claims 4 to 6, **characterized in that** provided on the second structural element (2), between a radially outer sealing line and the second through-opening, between the structural elements (1, 2), is an annular gas duct (18) which can be connected to a pressure-medium generator and has at least one outlet opening (19) in the wall of the second through-opening and in the region of action of the second dynamic seal (10).

8. Method of using a sealing system according to one of the preceding claims, **characterized in that** a sealing system according to one of the preceding claims is provided, in which, before the first structural element (1) is coupled to the second structural element (2), the first dynamic seal (9) is subjected to an internal pressure such that the elastic seal (8) is forced radially outward, and **in that**, in order to open the closing flaps (3, 4), there is a reduction in the internal pressure in the first dynamic seal (9), and, if appropriate, the second dynamic seal (10).

9. Method according to Claim 8, **characterized in that**, before the structural elements (1, 2) are uncoupled and following the reduction in the internal pressure in the first dynamic seal (9) and, if appropriate, in the second dynamic seal (10), a flushing gas is blown into the annular duct (18).

10. Method according to Claim 9, **characterized in that** in the presence of a second dynamic seal (10), before the structural elements (1, 2) are uncoupled and after a flushing gas has been blown into the annular duct (18), the second dynamic seal (10) is subjected to an internal pressure.

## Revendications

1. Système d'étanchéité monté sur un premier élément de construction (1), qui présente une première ouverture de passage, dans laquelle se trouve un premier clapet de fermeture (3) pouvant tourner autour d'un axe central pour fermer la première ouverture de passage, et qui peut être couplé axialement à la première ouverture de passage avec un deuxième élément de construction (2), dans lequel les deux éléments de construction (1, 2) sont appliqués l'un sur l'autre dans un plan d'étanchéité et un premier joint dynamique (9) se trouve entre le premier clapet de fermeture (3) et le premier élément de construction (1) sur le premier clapet de fermeture (3) sur le contour radialement extérieur de celui-ci, **caractérisé en ce qu'**un joint élastique (8) est présent sur la paroi de la première ouverture de passage et dans la zone active du premier joint dynamique (9), le diamètre intérieur du joint élastique (8) à l'état de repos étant plus petit que le diamètre extérieur du premier clapet de fermeture (3) et le premier joint dynamique (9) dans la position de fermeture du premier clapet de fermeture (3) pouvant être gonflé radialement vers l'extérieur par une pression interne, de telle façon que le joint élastique (8) soit déplacé au moins en partie radialement vers l'extérieur.

2. Système d'étanchéité selon la revendication 1, **caractérisé en ce que** le joint élastique (8) est de forme sensiblement cylindrique axialement par rapport à la première ouverture de passage, l'extrémité intérieure tournée vers le premier élément de construction (1) étant bloquée par ce dernier et l'extrémité extérieure étant orientée vers l'intérieur en direction de l'axe de la première ouverture de passage.

3. Système d'étanchéité selon la revendication 2, **caractérisé en ce qu'**un élément de ressort (15) agissant vers l'intérieur en direction de l'axe de la première ouverture de passage est présent sur l'extrémité extérieure du joint élastique (8).

4. Système d'étanchéité selon l'une quelconque des revendications 1 à 3, **caractérisé en ce qu'**une deuxième ouverture de passage avec un deuxième clapet de fermeture (4) est présente sur le deuxième élément de construction (2), dans lequel le deuxième clapet de fermeture (4) repose en position couplée parallèlement sur le premier clapet de fermeture (3) et est pivotable conjointement avec celui-ci, et le deuxième clapet de fermeture (4) présente un deuxième joint dynamique (10) qui correspond essentiellement au premier joint dynamique (9) sur le premier clapet de fermeture (3).

5. Système d'étanchéité selon la revendication 4, **caractérisé en ce que** le premier joint dynamique (9) sur le premier clapet de fermeture (3) et/ou le deuxième joint dynamique (10) sur le deuxième clapet de fermeture (4) sont formés de telle façon que les deux joints dynamiques (9, 10) soient appliqués l'un sur l'autre.

6. Système d'étanchéité selon l'une quelconque des revendications 1 à 5, **caractérisé en ce que** le joint élastique (8) est formé de telle façon que les deux éléments de construction (1, 2) soient appliqués de façon étanche l'un contre l'autre dans la position couplée.

7. Système d'étanchéité selon l'une quelconque des revendications 4 à 6, **caractérisé en ce qu'**il est prévu sur le deuxième élément de construction (2), entre une ligne d'étanchéité radialement extérieure et la deuxième ouverture de passage, entre les éléments de construction (1, 2) un canal de gaz annulaire (18), qui peut être raccordé à un générateur de fluide sous pression et qui présente au moins une ouverture de sortie (19) dans la paroi de la deuxième ouverture de passage ainsi que dans la zone active du deuxième joint dynamique (10).

8. Procédé d'utilisation d'un système d'étanchéité selon l'une quelconque des revendications précédentes, **caractérisé en ce qu'**il est prévu un système d'étanchéité selon l'une quelconque des revendications précédentes, dans lequel, avant le couplage du premier élément de construction (1) avec le deuxième élément de construction (2), le premier joint dynamique (9) est soumis à une pression interne de telle façon que le joint élastique (8) soit pressé radialement vers l'extérieur et que, pour l'ouverture des clapets de fermeture (3, 4), la pression interne dans le premier joint dynamique (9) et éventuellement dans le deuxième joint dynamique (10) soit abaissée.

9. Procédé selon la revendication 8, **caractérisé en ce qu'**un gaz de balayage est insufflé dans le canal annulaire (18) avant le découplage des éléments de construction (1, 2) et après l'abaissement de la pression interne dans le premier joint dynamique (9) et éventuellement dans le deuxième joint dynamique (10).

10. Procédé selon la revendication 9, **caractérisé en ce qu'**en cas de présence d'un deuxième joint dynamique (10), le deuxième joint dynamique (10) est soumis à une pression interne avant le découplage des éléments de construction (1, 2) et après l'insufflation d'un gaz de balayage dans le canal annulaire (18).
